# EUROPEAN PATENT SPECIFICATION

(11) **EP 2 188 528 B1**
(45) Date of publication and mention of the grant of the patent: **15.01.2014**
(21) Application number: 08806885.3
(22) Date of filing: 14.08.2008
(51) Int. Cl.: F04B 53/12, F04B 53/10, F04B 15/02, F16K 15/04

(54) **LIQUID PAINT PUMPING APPARATUS**
PUMPGERÄT FÜR FLÜSSIGFARBE
APPAREIL DE POMPAGE DE PEINTURE LIQUIDE

(30) Priority: 15.08.2007 GB 0715982
(43) Date of publication of application: 26.05.2010
(73) Proprietor: ITW Limited, Windsor Berkshire SL4 3BL (GB)
(72) Inventor: WOOD, Nigel, Burntwood Staffordshire WS7 9LA (GB); SMITH, Alan, Burntwood Staffordshire WS7 2PA (GB)
(74) Representative: Somervell, Thomas Richard
(86) International application number: PCT/IB2008/002143
(87) International publication number: WO 2009/022227

(56) References cited:
- GB-A- 2 176 267
- US-A- 3 248 020
- US-A- 4 003 399
- US-A- 5 061 159
- US-A- 5 228 842
- US-A- 5 647 737
- US-A- 5 671 656

## Description

### Field of the Invention

The present invention relates to an apparatus for pumping liquid paint, and particularly, but not exclusively to a check valve for use in a liquid paint pumping apparatus.

### Background

Reciprocating paint pumps are widely used for providing a pressurised flow of liquid paint to spray booths or the like, particularly in automotive finishing plant. These pumps employ pistons that reciprocate inside cylinders. In a first stroke of a piston paint is drawn into a cylinder chamber through an inlet port. In a second, reverse stroke of the piston paint is pumped out of the chamber through an outlet port. To prevent paint being pumped out through the inlet port, or drawn back in from the outlet port, automatic check valves are provided. Thus, for example, a check valve in the outlet port is configured to open automatically under the influence of paint pressure from the pump during the second stroke of the piston to allow the paint to be pumped out, but to close when the paint pressure drops as the piston draws in paint from the inlet port during the first stroke.

Double-action pumps employ the above principle using two cylinder chambers so that paint is drawn into one chamber while being pumped out of the other chamber, thereby maintaining a substantially continuous flow of paint.

Check valves are known that use a ball member to engage a seat for closing the valve. The ball and seat are retained by a valve housing, and the valve is configured such that the ball lifts clear of the seat under the influence of paint pressure. The paint flows through the housing past the ball in passages defined by a cage structure. The cage structure guides the ball member within the housing while allowing the paint to flow past. Conveniently, the cage structure is integrally formed with the housing (for example as a metal casting). In many pumping arrangements the valves are vertically aligned so that the paint pressure lifts the ball clear of the seat, and when the pressure is reduced on the reverse stroke of the pump, the ball falls under gravity back into engagement with the seat.

The movement of the ball away from the seat is guided by the cage structure such that the surface of the ball contacts the surfaces of the cage structure. Prolonged use results in the problem of wear or abrasion of the ball surface, which can eventually result in valve leakage. A further problem is that these check valves can be very noisy due the impacting contact between the ball and the cage surfaces.

In reciprocating paint pumps, it is often preferred that the pistons are arranged to move horizontally. Also, to maintain a more uniform flow of paint it is frequently preferred to employ two or more pistons, reciprocating out of phase with one another in corresponding cylinders. In such cases, to ensure that the balls correctly engage their seats during the reverse strokes of the pistons, it is either necessary to mount inlet and outlet check valves in a vertical orientation, or if the check valves are oriented horizontally, to provide springs that urge the balls towards their seats. However, the use of springs contacting the balls adds further to the problems of ball wear and leakage.

It is an object of the present invention to alleviate these problems.

US 3,248,020 describes a horizontal piston pump arrangement with outlet check valves. The check valves each include a ball that is urged into engagement with a seat by means of a spring and a spring keep interposes the spring and the ball. A horizontally-aligned spring and ball check valve arrangement is described in GB 2 176 267, which also describes use of a plastics material for a cage of the check valve.

### Summary of the Invention

According to the present invention there is provided a liquid paint pumping apparatus as defined in claim 1.

Embodiments may comprise a piston reciprocable in a cylinder to pump liquid paint during a substantially horizontal pumping stroke of the piston and to charge the cylinder with paint during a reverse stroke of the piston. The apparatus further comprises a check valve disposed within the piston, the check valve comprising: a ball member, a seat, a spring urging the ball member into engagement with the seat, and a plastics cage guiding movement of the ball towards and away from the seat. The seat receives the ball member so as to form a seal to prevent flow of liquid paint between the ball and the seat during the pumping stroke of the piston, and the ball member moves away from the seat during the reverse stroke of the piston.

It is an advantage that the mounting of the check valve inside the piston reduces the size of the pumping apparatus. In addition, the use of the plastics cage helps to reduce the wear of the ball, while the check valve is mounted horizontally within the piston.

Embodiments may comprise a liquid paint pumping apparatus comprising a piston reciprocable in a cylinder and configured to pump liquid paint during a substantially horizontal stroke of the piston. The apparatus further comprises a substantially horizontally mounted check valve. The check valve comprises: a ball member; a seat for receiving the ball member so as to form a seal to prevent flow of liquid paint between the ball and the seat, the check valve being configured for the ball to move away from the seat under the influence of paint pressure; a spring providing a biasing force urging the ball member into engagement with the seat; a plastics cage configured to guide movement of the ball towards and away from the seat; and a spring keep interposing the spring and the ball member.

In embodiments of the first and second aspects, the pump comprises a plurality of substantially horizontally mounted pistons reciprocable in corresponding cylinders. The pump may be configured for the pistons to reciprocate out of phase with one another.

Embodimnts may comprise a check valve for use in a liquid paint pumping apparatus, the check valve comprising a housing for retaining: a ball member; a seat for receiving the ball member so as to form a seal to prevent flow of liquid paint between the ball and the seat, the check valve being configured for the ball to move away from the seat under the influence of paint pressure; a plastics cage configured to guide movement of the ball away from the seat and to provide a passage for flow of liquid paint through the housing, a spring providing a biasing force urging the ball member into engagement with the seat; and a spring keep interposing the spring and the ball member.

Preferably, the cage is separable and removable from the housing.

The spring keep may be of a plastics material. The plastics material of the cage and/or of the spring keep may be an acetal resin engineering plastic such as polyoxymethylene (POM), polytrioxane or polyformaldehyde.

It is an advantage that the use of a plastics material for the cage reduces the effects of abrasion and wear on the ball. Instead it is the cage that suffers the effects of the contact from the ball. Wear to the cage will not result in valve leakage. Moreover, where the cage is separable and removable from the housing, it can readily be replaced. Furthermore, the use of a plastics spring keep helps to protect the ball member from becoming scratched and worn resulting from contact with the spring. A further advantage with the use of plastics for the cage is that the noise caused by the contacting surfaces is greatly reduced when compared with, say, a metallic cage.

In embodiments of the invention, the check valve is configured for mounting in a vertical orientation such that the ball member lifts away from the seat under the influence of paint pressure.

The spring may be a helically coiled spring. The spring may be a compression spring.

In a preferred embodiment, the helically-coiled spring is shaped to prevent contact with adjacent surfaces. Preferably, the helically coiled spring has a frusto-conical shape. It is an advantage that the frusto-conical shape means that the moveable end of the spring, which engages the ball member, can be kept away from surfaces of the housing that might otherwise rub against the spring and cause wear.

In embodiments of the invention, the check valve is configured for operation with the ball member moveable in a substantially horizontal direction.

### Brief Description of the Drawings

Figure 1 is a sectional elevation of a single-piston pump with a vertically- mounted check- valve; and
Figure 2 is a sectional elevation of a twin-piston double-acting pump with horizontally-mounted check valves.

### Detailed Description

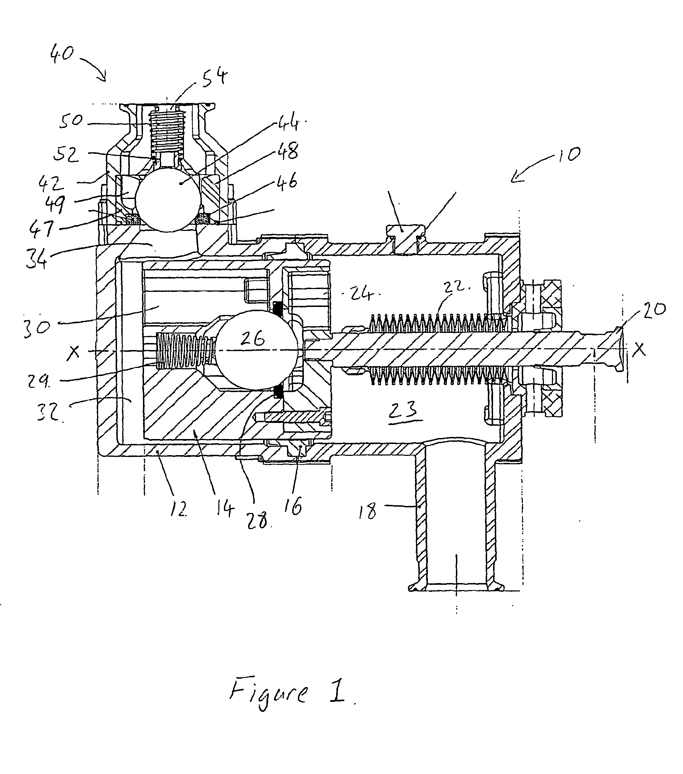

Referring to Figure 1, a paint pumping arrangement 10, includes a cylinder casing 12, within which is a piston 14 mounted for reciprocating movement along an axis X-X. An annular sealing ring 16 forms a seal between the cylinder casing 12 and the piston 14. The cylinder casing is provided with an inlet port 18 for coupling to a supply of liquid paint. The piston 14 is coupled to a shaft 20, which is driven in reciprocating manner by a drive arrangement (not shown). A bellows seal arrangement 22 provides a seal around the shaft 20 with the cylinder 12.

Within the structure of the piston 14 is an inlet check- valve arrangement, which comprises a ball member 26, which is biased towards contact with a seat 28 by a helical compression spring 29. The inlet check valve arrangement (in the position shown in Figure 1) provides a seal between an inlet-side passage 24 and an outlet-side passage 30. the inlet-side passage is in fluid communication with the inlet port 18 via the space 23 to the right of the piston 14 in Figure 1. The outlet passage 30 opens into a space 32 to the left of the piston 14 in Figure 1, which is in fluid communication with an outlet port 34. to prevent flow of paint through the piston 14.

Mounted above the outlet port 34 is an outlet check valve 40, which includes a housing 42. The housing 42 retains a ball member 44, which forms a sealing contact with a seat 46. Surrounding the ball member 44 is a plastics material cage 47. The cage 47 has a structure that includes a plurality of vertically oriented splines 48 defining a plurality of flow passages 49 disposed around the ball member 44. In the embodiment shown in Figure 1, the ball member 44 is biased towards contact with the seat 46 by means of a helical compression spring 50. Interposing the compression spring 50 and the ball member 44 is a spring keep 52, formed of a plastics material. At its top end, the spring 50 engages a central abutment 54 that forms part of the housing 42.

A particularly suitable plastics material for the cage and/or of the spring keep is an acetal resin engineering plastic such as polyoxymethylene (POM), polytrioxane or polyformaldehyde. An exemplary material is marketed under the name Delrin^{(RTM)}. This material is a lightweight, low-friction, and wear-resistant plastic capable of operating in temperatures in excess of 90 degrees celsius and often marketed and used as a metal substitute.

In use, the piston 14 is driven to reciprocate within the cylinder 12. In a first stroke, the piston is moved to the right, as shown in Figure 1, so that paint in the space 23 enters the inlet-side passage 24 and causes the ball member 26 to lift clear of the seat 28 so that the paint flows through the outlet-side passage 30 into the space 32. Accordingly, the space 32 becomes charged with paint.

When the piston 14 reaches the end of the first stroke and reverses to commence a second stroke, the ball member 26 is urged back into contact with the seat 28, so that paint cannot pass back from the space 32 to the inlet side. Instead the paint in the space 32 is pumped out through the outlet port 34. The pressure of the paint (which is being pushed by the piston 24) acts against the underside of the ball member 44 of the outlet check valve 40, causing it to lift away from the seat 46. The movement of the ball member 44 is guided by the splines 48 of the cage 47 so that the paint can flow through the flow passages 49 in the cage 47. When the piston 14 reaches the end of the second stroke and commences a new first stroke, the pressure of the paint acting against the ball member 44 reduces such that the ball member drops back into contact with the seat 46.

In the embodiment shown in Figure 1, the ball member is urged back into contact with the seat with the aid of the compression spring 50 acting through the spring keep 52. However, in some embodiments it may not be necessary to include the spring 50, but to simply allow the ball member to drop back into contact with the seat 46 under its own weight. Once in contact with the seat, as the piston moves during another first stroke (i.e. to the right as shown in Figure 1) the ball member 44 will be urged into sealing contact with the seat 46 by the differential pressure of the paint above and below the ball member 44.

As stated above, the cage 47 is formed of a plastics material. In the life of a pump the check valves may be expected to undergo many thousands of openings and closings. It is important to maintain integrity of the sealing surfaces of the ball member 44 and the seat 46. For this reason, the ball member is preferably a hard-wearing, precision formed metal ball. However, there will be many thousands of contacts between the ball member 44 and the cage 47, particularly the splines 48. These multiple, repeated contacts inevitably cause wear or even abrasion of the surfaces. For cage surfaces formed of a hard (for example metallic) material, then wear/abrasion will result on the surface of the ball member 44. Eventually the surface of the ball may become worn to an extent that leakage can occur between the ball member 44 and the seat 46.

However, with a plastics material cage, although wear and abrasion may still occur, this will be predominantly on the softer plastics material. Wear/abrasion to the cage can be tolerated to a much greater extent than wear to the ball member because the cage does not have to form a paint seal. Furthermore, the plastics cage 47 is a much simpler and less costly component to manufacture and replace than the ball member 44. For this reason the check valve 40 is configured so that the cage 47 is a separate component that is removable from the valve to allow it to be removed and replaced when it becomes worn.

Another way that the ball member 44 may become worn is through contact with the compression spring 50. If the compression spring 50 were to directly contact the ball member 44, then, any relative movement of the surfaces would be a potential cause of wear or abrasion. For this reason the spring keep 52 is used to interpose the spring 50 and the surface of the ball member 44. Again, the spring keep is a plastics material, which protects the ball surface. The spring keep 52 can readily be replaced if it becomes worn.

A further advantage with the use of plastics for the cage is that the contact between the ball surface and the plastics surface of the cage is much less noisy when compared with, say, a metal to metal contact between the ball and a metallic cage.

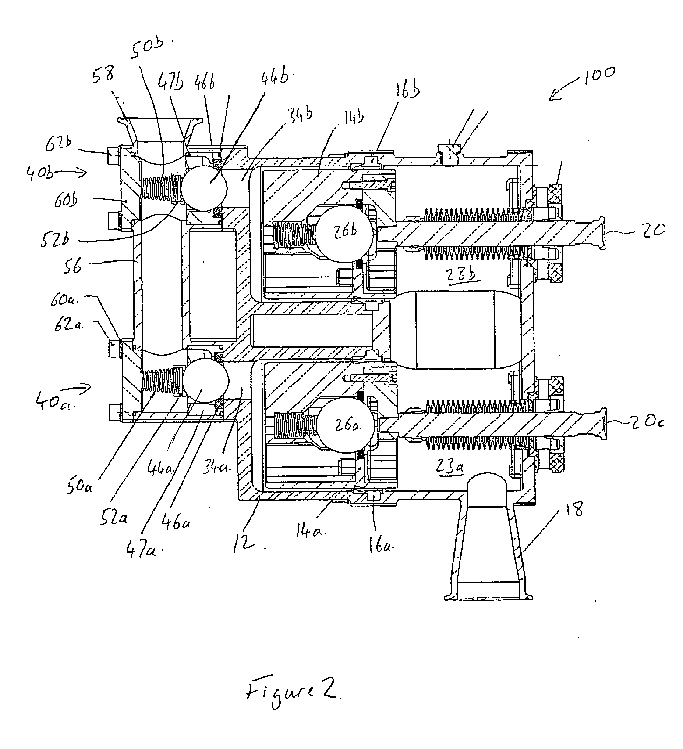

Referring to Figure 2, there is shown a twin-piston pump, shown generally as 100, and with corresponding features identified by the same reference numerals as Figure 1. The pump 100 consists of two pistons 41a, 14b, each of which reciprocates within a corresponding cylinder within a common casing 12. the casing 12 has a single inlet 18 from which paint can flow into inlet spaces 23a, 23b on the right of each corresponding piston 14a, 14b. Associated with each piston 14a, 14b is a corresponding outlet check valve 40a, 40b, similar to the check valve 40 of Figure 1, except that the check valves 40a, 40b are mounted horizontally. The check valves 40a, 40b are interconnected by a conduit 56 and have a common outlet 58 for connection to a paint delivery system (not shown)

In this arrangement, each piston operates in the same manner as described above for the single piston pump of Figure 1, except that the pistons are driven out of phase with each other. Thus, when the first piston 14a is on its pumping stroke to pump paint out through its outlet 34a and check valve 40a, the second piston 14b is moving in the opposite direction to draw in a charge of paint to be pumped out at the next stoke. In this way paint can be pumped substantially continuously.

The check valves 40a, 40b are each mounted horizontally, which means that the valves cannot make use of the weight of the ball members 44a, 44b to aid closure. Therefore, in this embodiment the springs 50a, 50b are required. Also shown in Figure 2 are check valve cover plates 60a, 60b, which are secured to the respective valve housings by way of releasable fasteners 62a, 62b, such as screws. The cover plates are easily removable to allow the check valve components to be removed. It is particularly convenient that the plastics cages 47a, 47b and/or the spring keeps 52a, 52b can be removed in this way to be inspected and replaced if they become excessively worn.

As can be seen in Figure 1, the compression spring 29, which biases the ball member 26 in the piston 14, has a frusto-conical shape. Similarly the compression springs 50a, 50b in the check valves 40a, 40b in Figure 2 also have a frusto-conical shape. For each of the springs, one end of the spring is at a fixed position relative to the surrounding surfaces, while the other end moves to increase or decrease the amount of compression as the ball member moves. The frusto-conical shape means that the surfaces adjacent the springs (which will generally be metallic surfaces of the associated pump or valve components) are kept away from the moving parts of the springs so as to prevent contact with those surfaces, which would otherwise lead to wear of the springs.

## Claims

1. A liquid paint pumping apparatus that includes a check valve (40; 40a, 40b) comprising:
a housing (42);
a ball member (44; 44a, 44b) retained in the housing;
a seat (46; 46a, 46b) for receiving the ball member so as to form a seal to prevent flow of liquid paint between the ball and the seat, the check valve being configured for the ball to move away from the seat under the influence of paint pressure;
a spring (50; 50a, 50b) providing a biasing force urging the ball member into engagement with the seat; and
**characterised by**:
a plastics cage (47; 47a, 47b) configured to guide movement of the ball away from the seat and to provide a passage for flow of liquid paint through the housing; and
a plastics spring keep (52; 52a, 52b) interposing the spring and the ball member; and
in that the spring is a helically-coiled compression spring having a frusto-conical shape to prevent contact with adjacent surfaces.

2. A apparatus according to claim 1 wherein the cage (47; 47a, 47b) is separable and removable from the housing (42).

3. The apparatus of claim 1 or claim 2 configured for mounting in a vertical orientation such that the ball member (44) lifts away from the seat (46) under the influence of paint pressure.

4. The apparatus of any preceding claim wherein the plastics material of the spring keep (52; 52a, 52b) is an acetal resin engineering plastic such as polyoxymethylene (POM), polytrioxane or polyformaldehyde.

5. The apparatus of any preceding claim configured for operation with the ball member (44a, 44b) moveable in a substantially horizontal direction.

6. The apparatus of any preceding claim wherein the plastics material of the cage (47; 47a, 47b) is an acetal resin engineering plastic such as polyoxymethylene (POM), polytrioxane or polyformaldehyde.

7. The apparatus of any preceding claim comprising a piston (14) reciprocable in a cylinder (12) to pump liquid paint during a substantially horizontal pumping stroke of the piston and to charge the cylinder with paint during a reverse stroke of the piston, wherein the check valve is disposed within the piston (14), and
wherein the seat (28) receives the ball member (26) so as to form a seal to prevent flow of liquid paint between the ball and the seat during the pumping stroke of the piston, and the ball member moves away from the seat during the reverse stroke of the piston.

8. The apparatus of claim 7, comprising a plurality of substantially horizontally mounted pistons (14a, 14b) reciprocable in corresponding cylinders.

9. The apparatus according to claim 8, configured for the pistons (14a, 14b) to reciprocate out of phase with one another.

## Patentansprüche

1. Pumpvorrichtung für flüssige Farbe, wobei die Vorrichtung ein Rückschlagventil (40; 40a, 40b) einschließt, das Folgendes umfasst:
ein Gehäuse (42);
ein Kugelelement (44; 44a, 44b), das in dem Gehäuse festgehalten wird;
einen Sitz (46; 46a, 46b) zum Aufnehmen des Kugelelements, um so eine Dichtung zu bilden, um einen Durchfluss von flüssiger Farbe zwischen der Kugel und dem Sitz zu verhindern, wobei das Rückschlagventil so konfiguriert ist, dass sich die Kugel unter dem Einfluss des Farbdrucks von dem Sitz weg bewegt,
eine Feder (50; 50a, 50b), die eine Vorspannkraft bereitstellt, die das Kugelelement in einen Eingriff mit dem Sitz drängt; und
**gekennzeichnet durch**:
einen Kunststoffkäfig (47; 47a, 47b), der dafür konfiguriert ist, die Bewegung der Kugel weg von dem Sitz zu führen und einen Durchgang für einen Durchfluss von flüssiger Farbe **durch** das Gehäuse bereitzustellen, und
eine Kunststoff-Federhalterung (52; 52a, 52), die zwischen der Feder und dem Kugelelement angeordnet ist, und
**dadurch**, dass die Feder eine spiralförmig gewundene Druckfeder ist, die eine kegelstumpfförmige Gestalt hat, um eine Berührung mit benachbarten Flächen zu verhindern.

2. Vorrichtung nach Anspruch 1, wobei der Käfig (47; 47a, 47b) von dem Gehäuse (42) getrennt und abgenommen werden kann.

3. Vorrichtung nach Anspruch 1 oder Anspruch 2, die für eine Anbringung in einer vertikalen Ausrichtung konfiguriert ist derart, dass sich das Kugelelement (44) unter dem Einfluss des Farbdrucks von dem Sitz (46) weg hebt.

4. Vorrichtung nach einem der vorhergehenden Ansprüche, wobei das Kunststoffmaterial der Federhalterung (52; 52a, 52b) ein technischer Acetalharz-Kunststoff, wie beispielsweise Polyoxymethylen (POM), Polytrioxan oder Polyformaldehyd, ist.

5. Vorrichtung nach einem der vorhergehenden Ansprüche, die für einen Betrieb konfiguriert ist, wobei das Kugelelement (44a, 44b) in einer im Wesentlichen horizontalen Richtung bewegt werden kann.

6. Vorrichtung nach einem der vorhergehenden Ansprüche, wobei das Kunststoffmaterial des Käfigs (47; 47a, 47b) ein technischer Acetalharz-Kunststoff, wie beispielsweise Polyoxymethylen (POM), Polytrioxan oder Polyformaldehyd, ist.

7. Vorrichtung nach einem der vorhergehenden Ansprüche, die einen Kolben (14) umfasst, der in einem Zylinder (12) hin- und hergehen kann, um während eines im Wesentlichen horizontalen Pumphubes des Kolbens flüssige Farbe zu pumpen und während eines Umkehrhubes des Kolbens den Zylinder mit Farbe zu laden, wobei das Rückschlagventil innerhalb des Kolbens (14) angeordnet ist, und
wobei der Sitz (28) das Kugelelement (26) aufnimmt, um so eine Dichtung zu bilden, um während des Pumphubes des Kolbens einen Durchfluss von flüssiger Farbe zwischen der Kugel und dem Sitz zu verhindern, und sich die Kugel während des Umkehrhubes des Kolbens von dem Sitz weg bewegt.

8. Vorrichtung nach Anspruch 7, die mehrere im Wesentlichen horizontal angebrachte Kolben (14a, 14b) umfasst, die in entsprechenden Zylindern hin- und hergehen können.

9. Vorrichtung nach Anspruch 8, die so konfiguriert ist, dass die Kolben (14a, 14b) phasenungleich miteinander hin- und hergehen.

## Revendications

1. Appareil de pompage de peinture liquide, englobant une soupape de retenue (40 ; 40a, 40b), comprenant :
un logement (42) ;
un élément de bille (44 ; 44a, 44b) retenu dans le logement ;
un siège (46 ; 46a, 46b) pour recevoir l'élément de bille de sorte à former un joint d'étanchéité pour empêcher un écoulement de la peinture liquide entre la bille et le siège, la soupape de retenue étant configurée de sorte que la bille se déplace à l'écart du siège sous l'influence de la pression de la peinture ;
un ressort (50 ; 50a, 50b), produisant une force de poussée, exerçant une poussée sur l'élément de bille en vue de son engagement dans le siège ; et
**caractérisé par** :
une cage en plastique (47 ; 47a, 47b), configurée de sorte à guider le déplacement de la bille à l'écart du siège et à établir un passage pour l'écoulement de la peinture liquide à travers le logement ; et
un élément de retenue du ressort en plastique (52 ; 52a, 52b), agencé entre le ressort et l'élément de bille ; et
en ce que le ressort est un ressort de compression à enroulement en hélice ayant une forme en tronc de cône pour empêcher un contact avec des surfaces adjacentes.

2. Appareil selon la revendication 1, dans lequel la cage (47 ; 47a, 47b) peut être séparée et retirée du logement (42).

3. Appareil selon les revendications 1 ou 2, configuré pour un montage dans une orientation verticale, de sorte que l'élément de bille (44) se soulève à l'écart du siège (46) sous l'influence de la pression de la peinture.

4. Appareil selon l'une quelconque des revendications précédentes, dans lequel le matériau plastique de l'élément de retenue du ressort (52 ; 52a, 52b) est un plastique industriel à base de résine d'acétal, par exemple un polyoxyméthylène (POM), un polytrioxane ou un polyformaldéhyde.

5. Appareil selon l'une quelconque des revendications précédentes, configuré pour un fonctionnement dans lequel l'élément de bille (44a, 44b) peut être déplacé dans une direction essentiellement horizontale.

6. Appareil selon l'une quelconque des revendications précédentes, dans lequel le matériau plastique de la cage (47 ; 47a, 47b) est un plastique industriel à base de résine d'acétal, par exemple du polyoxyméthylène (POM), du polytrioxane ou de polyformaldéhyde.

7. Appareil selon l'une quelconque des revendications précédentes, comprenant un piston (14) pouvant effectuer un mouvement alternatif dans un cylindre (12), pour pomper la peinture liquide au cours d'une course de pompage essentiellement horizontale du piston et pour charger le cylindre avec la peinture au cours d'une course de retour du piston, la soupape de retenue étant agencée dans le piston (14) ; et
dans lequel le siège (28) reçoit l'élément de bille (26) de sorte à former un joint d'étanchéité pour empêcher un écoulement de la peinture liquide entre la bille et le siège au cours de la course de pompage du piston, l'élément de bille se déplaçant à l'écart du siège au cours de la course de retour du piston.

8. Appareil selon la revendication 7, comprenant plusieurs pistons à montage essentiellement horizontal (14a, 14b) pouvant effectuer un mouvement alternatif dans des cylindres correspondants.

9. Appareil selon la revendication 8, configuré de sorte que les pistons (14a, 14b) peuvent effectuer un mouvement alternatif en opposition de phase l'un avec l'autre.
